# EUROPEAN PATENT APPLICATION

(11) **EP 2 028 219 A1**
(43) Date of publication of application: **25.02.2009**
(21) Application number: 07114924.9
(22) Date of filing: 24.08.2007
(51) Int. Cl.: C08J 3/22, C08K 3/34, C08L 23/02, C08J 5/00, C08L 67/04

(54) **Resin compositions comprising polyolefins, poly(hydroxy carboxylic acid) and nanoclays.**

(71) Applicant: TOTAL PETROCHEMICALS RESEARCH FELUY, 7181 Seneffe (Feluy) (BE)
(72) Inventor: Debras, Guy, B-6210, Frasnes-lez-Gosselies (BE); Luijkx, Romain, B-7521, Chercq (BE)

(57) **Abstract**

A resin composition comprising a polyolefin, a nanoclay and poly(hydroxy carboxylic acid). The invention also covers a process for preparing a resin composition comprising a polyolefin, a nanoclay and poly(hydroxy carboxylic acid) by (i) blending a poly(hydroxy carboxylic acid) with a nanoclay to form a composite (ii) blending the composite with a polyolefin. The use of poly(hydroxy carboxylic acids) as a compatibiliser to blend nanoclays into polyolefins is also claimed.

## Description

### TECHNICAL FIELD OF THE INVENTION

The present invention is concerned with obtaining polyolefin compositions containing nanoclays.

### BACKGROUND OF THE INVENTION

Nanoclays are a class of nanocompounds that have potential in reinforcing polyolefins and in increasing their flame retardancy and barrier properties. Composites made of polyolefins and nanoclays can potentially exhibit increased tensile strength, heat distortion resistance, and improved barrier properties to atmospheric gases. Further, it has been found that nanoclay composites impart a level of UV resistance not present in the pure polymer component. Because of these enhanced properties, such nanocomposites are useful in the electronics, automobile, aircraft, and aerospace industries, among others.

Nanoclays are layered clay minerals including natural or synthetic phyllosilicates. These include in particular kaolin clays and smectite clays, the latter including montmorillonite, nontronite, beideliite, hectorite, saponite, sauconite and vermiculite, as well as magadiite, kenyaite, stevensite, halloysite, aluminate oxides and hydrotalcite. Synthetic clays also include fluorohectorite and fluoromica.

Each of these nanoclays is a layered silicate, held together by intercalation layers, often water. They have a unique morphology, each layer (or platelet) featuring at least one dimension in the nanometre range. Each of these platelets is characterized by a large aspect ratio (diameter/thickness on the order of 100-1000). Accordingly, when the clay is dispersed homogeneously as individual platelets throughout the polymer matrix, dramatic increases in strength, flexural and Young's modulus, and heat distortion temperature are observed at very low filler loadings (<10% by weight) because of the large surface area contact between polymer and filler. In addition, barrier properties are greatly improved because the large surface area of the platelets greatly increases the tortuosity of the path a diffusing species must follow in permeating through the polymeric material.

Depending on the precise chemical composition of the clay, the layers generally bear a charge on the surface and edges of the platelets. This charge is balanced by counterions, which reside in part in the gallery spaces between the layers. Thus, the stacks of nanoclay are held tightly together by electrostatic forces.

When used in a nanocomposite, the platelets of silicate are separated, preferably to the extent that the nanoclay is present as "exfoliated" flexible, "two-dimensional" sheets. Preferably, these exfoliated individual layers are separated from one another and dispersed uniformly throughout the polyolefin matrix.

Silicates are naturally hydrophilic and polyolefins are hydrophobic, thus the two components are not easily miscible. Therefore, the surface of the nanoclays have to be modified using organic surface modifiers, such as ammonium or phosphonium compounds, prior to exfoliation. Even then, exfoliation processes into polyolefins are complex, expensive and often only partially successful. Even the best processes do not fully exfoliate the modified nanoclay, but rather only the outermost and top layers. As a result, un-exfoliated nanoclays remain in the polyolefin nanocomposite, causing inhomogeneity and weak points throughout the matrix while undermining the total potential properties improvements. Some layers also tend to reagglomerate after having been exfoliated due to the strong attractive electrostatic forces that remain.

Attempts to produce well-exfoliated polymer-clay nanocomposites by non-chemical methods (e.g. melt blending or solution blending of polymer-clay systems) have not been successful. Twin-screw extrusions of polymer-clay mixtures have not yielded well-exfoliated clays in the polymer, though it has resulted in some relatively good polymer-clay contact. Twin-screw extrusion, or melt extrusion, is well known in the art, wherein a mixture or compound is processed through a twin-screw extruder or compounder, or an intensive mixer.

In addition to melt-extrusion, the method of solid-state shear pulverization has been developed for preparing polymer materials, as disclosed in U.S. Pat. No. 5,814,673 to Khait and U.S. Pat. No. 6,180, 685 also to Khait, the disclosures of which are incorporated herein by reference. As disclosed in the Khait patents, a chemical change to a polymer material is effected by application of mechanical energy through solid-state shear pulverization in the presence of cooling sufficient to maintain the material in the solid state during pulverization. However, the Khait patents do not disclose or suggest a method of producing homogeneous resin compositions comprising polyolefins and well-dispersed nanoclays.

It is hence an object of the invention to produce nanoclay-poly(hydroxy carboxylic acid) composites that are highly homogeneous.

It is therefore also an aim of the invention to enhance the dispersion of nanoclays in polyolefins in the nanoscale.

Furthermore, it is an aim of the invention to obtain a homogeneous nanoclay-poly(hydroxy carboxylic acid) composite by melt processing.

Additionally, it is an aim of the invention to blend the nanoclays with the polyolefin without requiring a functionalisation or modification step respectively.

It is also an object of the invention to provide a resin with better mechanical properties than polyolefins.

It is another aim of the invention to provide a resin with better flame retardant properties than polyolefins.

It is yet another aim of the invention to provide a resin with improved barrier properties when compared to polyolefins.

### SUMMARY OF THE INVENTION

At least one of the objectives of the invention were met by providing a resin composition comprising a polyolefin, poly(hydroxy carboxylic acid) and a nanoclay.

The invention also provides a process for preparing said resin composition by:
i. blending a poly(hydroxy carboxylic acid) with a nanoclay to form a composite
ii. blending the composite with a polyolefin.

The invention also covers a process for preparing a nanoclay-containing masterbatch by melt blending a poly(hydroxy carboxylic acid) with a nanoclay to form a composite.

Use of poly(hydroxy carboxylic acid) as a compatibiliser to blend nanoclays into polyolefins is also claimed.

### DESCRIPTION OF THE INVENTION

Upon blending a poly(hydroxy carboxylic acid) with polyolefins, in particular metallocene-catalysed polyolefins, the Applicant noted that homogeneous blends could be achieved via simple melt blending without the need of compatibilisers.

It was also noted that composites of nanoclays and poly(hydroxy carboxylic acid)s were also homogeneous, with well-dispersed nanoclays in the poly(hydroxy carboxylic acid) matrix. It is thought, without wishing to be bound by theory, that the compatibility arises due to the similar polarities of the two components.

The invention thus makes use of the compatibility of poly(hydroxy carboxylic acid)s with nanoclays and of the surprising compatibility of poly(hydroxy carboxylic acid)s with polyolefins, in particular metallocene polyolefins.

First, a nanoclay - poly(hydroxy carboxylic acid) composite is prepared, which is to be used as a masterbatch for blending with the polyolefin.

### Nanoclays

As mentioned above, nanoclays are silicate layers, each layer having a thickness of the order of at least 0.1 nm. The choice of nanoclay for the purposes of this invention is not particularly limited.

Any nanoclay including natural or synthetic phyllosilicates, particularly smectite clays such as montmorillonite, nontronite, beideliite, hectorite, saponite, sauconite and vermiculite, as well as magadiite, kenyaite, stevensite, halloysite, aluminate oxides and hydrotalcite and combinations thereof, can be used. Synthetic clays that can be employed are for example fluorohectorite and fluoromica. Combinations thereof may be used in the resin composition, as well as in the process for making the nanoclay composite masterbatch.

The nanoclay can be an aluminosilicate consisting of silica SiO₄ tetrahedra bonded to alumina AlO₆ octahedra in a variety of ways. A 2:1 ratio of the tetrahedra to the octahedra results in smectite clays, the most common of which is montmorillonite. Smectite clays are clays that can be swollen with small molecules. Preferably, the clay is a smectite clay, more preferably it is a montmorillonite.

Other metals such as magnesium may replace the aluminium in the crystal structure.

Typically, the clays have a negative charge on the surface, preferably of at least about 20 milliequivalents, preferably at least about 50 milliequivalents, and more preferably from about 50 to 150 milliequivalents, per 100 grams of the layered clay material.

Since the nanoclay is first blended with poly(hydroxy carboxylic acid) and both components are polar, it is not a requisite to organically modify the nanoclay to make it less polar, as would be the case when directly blending a nanoclay into a polyolefin. Thus a processing step can be omitted.

However, the nanoclays may still be optionally organically modified to increase dispersion even further. The nanoclays can be treated with organic molecules that are capable of being absorbed within the clay material, e.g. between the layers, thereby expanding (swelling) the volume of the nanoclay. For example, the space between the adjacent layers can be expanded from about 0.4 nm or less to about 1 nm or even more. Polymers can enter this space more easily.

If the modified or non-modified nanoclay is swollen with polymer, the platelets or sheets are said to be intercalated. If the clay swells so much that the sheets are no longer organised into stacks, the clay is said to be exfoliated. The clays used in the invention are preferably at least intercalated with the poly(hydroxy carboxylix acid). More preferably they are completely exfoliated and dispersed throughout the poly(hydroxy carboxylic acid) matrix.

"Organically modified clay," as used herein, refers to a clay that has been modified by the addition-of a swelling agent. Any organic molecules suitable as swelling agents may be used. Preferably, the swelling agents include cationic surfactants, for example including ammonium, phosphonium or sulfonium salts; amphoteric surface active agents; derivatives of aliphatic, aromatic or arylaliphatic amines, phosphines and sulfides; and organosilane compounds; and combinations thereof. Other suitable swelling agents include protonated amino acids and salts thereof containing 2-30 carbon atoms, such as 12-aminododecanoic acid and epsilon-caprolactum, as well as any combinations thereof.

The clay mineral or other layered silicate can be organically modified by any other technique known to one of ordinary skill in the art, such as those taught in U.S. Patent Nos. 5,728,764, 4,810,734 and 3,671,190. However, it is not intended that these methods be limited to any specific process or procedure.

Levels of exfoliation may be determined by an x-ray scattering test. An absence of scattering peaks at a characteristic scattering angle indicates high levels of exfoliation. Conversely, a large scattering peak indicates decreased (or poor) exfoliation. The scattering angle is inversely correlated with interlayer or gallery spacing. Specifically, scattering angle (theta) is linearly proportional to I/d, where d equals interlayer spacing. Therefore, the level of exfoliation is measured by analyzing the level of scattering intensity at the expected scattering angle (based on the interlayer spacing). Thus, the interlayer or gallery spacing is a function of the particular clay. Complete exfoliation, wherein all stacks are delaminated into single platelets surrounded by polymer, may not be required to attain optimal nanocomposite properties. However, substantial exfoliation is generally desired in order to attain the above noted enhanced properties in the resulting product. Substantial or high levels of exfoliation is defined herein as an exfoliation level that lacks any significant scattering peak in an x-ray scattering test.

Preferably, the cation exchange capacity of the clay is at least about 20 milliequivalents/100 grams since organic molecules are not exchanged as well at lower cation exchange capacities and will have reduced expansion of the clay. Preferably, the cation exchange capacity is no more than about 200 milliequivalents/100 grams. If the exchange capacity exceeds about 200 milliequivalents/100 grams, the bonding strength between the clay mineral layers becomes fairly strong and it becomes more difficult to expand the clay.

### The poly(hydroxy carboxylic acid)

The poly(hydroxy carboxylic acid) can be any polymer wherein the monomers are derived from renewable resources and comprise at least one hydroxyl group and at least carboxyl group. The hydroxy carboxylic acid monomer is preferably obtained from renewable resources such as corn and rice or other sugar- or starch-producing plants. Preferably the poly(hydroxy carboxylic acid) used according to the invention is biodegradable. The term "poly(hydroxy carboxylic acid)" includes homo- and copolymers herein.

The poly(hydroxy carboxylic acid) can be represented as in Formula I: 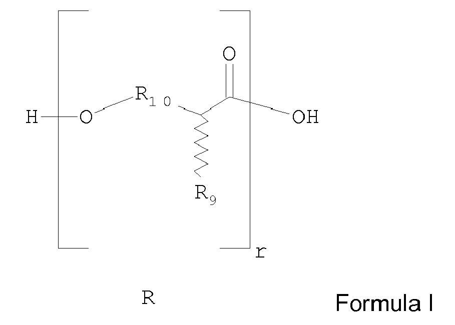 wherein
- R9 is hydrogen or a branched or linear alkyl comprising from 1 to 12 carbon atoms;
- R10 is optional and can be a branched, cyclic or linear alkylene chains comprising from 1 to 12 carbon atoms; and
- "r" represents the number of repeating units of R and is any integer from 30 to 15000.

The monomeric repeating unit is not particularly limited, as long as it is aliphatic and has a hydroxyl residue and a carboxyl residue. Examples of possible monomers include lactic acid, glycolic acid, 3-hydroxybutyric acid, 4-hydroxybutyric acid, 4-hydroxyvaleric acid, 5-hydroxyvaleric acid, 6-hydroxycaproic acid and the like.

The monomeric repeating unit may also be derived from a cyclic monomer or cyclic dimer of the respective aliphatic hydroxycarboxylic acid. Examples of these include lactide, glycolide, β-propiolactone, β-butyrlactone, γ-butyrolactone, γ-valerolactone, δ-valerolactone, ε-caprolactone and the like.

In the case of asymmetric carbon atoms within the hydroxy carboxylic acid unit, each of the D-form and the L-form as well as mixtures of both may be used. Racemic mixtures can also be used.

The term "poly(hydroxy carboxylic acid)" also includes blends of more than one poly(hydroxy carboxylic acid).

The poly(hydroxy carboxylic acid) may optionally comprise one or more comonomers.

The comonomer can be a second different hydroxycarboxylic acid as defined above in Formula I. The weight percentage of each hydroxycarboxylic acid is not particularly limited.

The comonomer can also comprise dibasic carboxylic acids and dihydric alcohols. These react together to form aliphatic esters, oligoesters or polyesters as shown in Formula II having a free hydroxyl end group and a free carboxylic acid end group, capable of reacting with hydroxy carboxylic acids, such as lactic acid and polymers thereof. 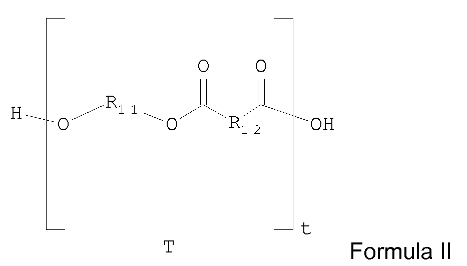 wherein
- R11 and R12 are branched or linear alkylenes comprising from 1 to 12 carbon atoms and can be the same or different;
- "t" represents the number of repeating units T

These copolymers are also within the scope of the invention. The sum of the number of repeating units "r" (Formula I) and "t" (Formula II) is any integer from 30 to 15000. The weight percentages of each monomer i.e. the hydroxycarboxylic acid monomer and the aliphatic ester or polyester comonomer of Formula II are not particularly limited.

Preferably, the poly(hydroxy carboxylic acid) comprises at least 50 wt % of hydroxycarboxylic acid monomers and at most 50 wt % of aliphatic ester, oligoester or polyester comonomers.

The dihydric alcohols and the dibasic acids that can be used in the aliphatic polyester unit as shown in Formula II are not particularly limited. Examples of possible dihydric alcohols include ethylene glycol, diethylene glycol, triethyleneglycol, propylene glycol, dipropylene glycol, 1,3-butanediol, 1,4-butanediol, 3-methyl-1,5-pentanediol, 1,6-hexanediol, 1,7-octanediol, 1,9-nonanediol, neopentyl glycol, 1,4-cyclohexanediol, isosorbide and 1,4-cyclohexane dimethanol and mixtures thereof.

Aliphatic dibasic acids include succinic acid, oxalic acid, malonic acid, glutaric acid, adipic acid, pimelic acid, suberic acid, azelaic acid, sebacic acid; undecanoic diacid, dodecanic diacid and 3,3-dimethylpentanoic diacid, cyclic dicarboxylic acids such as cyclohexanedicarboxylic acid and mixtures thereof. The dibasic acid residue in the hydroxy carboxylic acid copolymer can also be derived from the equivalent diacylchlorides or diesters of the aliphatic dibasic acids.

In the case of asymmetric carbon atoms within the dihydric alcohol or the dibasic acid, each of the D-form and the L-form as well as mixtures of both may be used. Racemic mixtures can also be used.

The copolymer can be an alternating, periodic, random, statistical or block copolymer.

Polymerisation can be carried out according to any method known in the art for polymerising hydroxy carboxylic acids. Polymerisation of hydroxy carboxylic acids and their cyclic dimmers is carried out by polycondensation or ring-opening polymerisation.

Copolymerisation of hydroxycarboxylic acids can be carried out according to any method known in the art. The hydroxycarboxylic acid can be polymerised separately prior to copolymerisation with the comonomer or both can be polymerised simultaneously.

In general, the poly(hydroxy carboxylic acid), homo- or copolymer (copolymerised with a second different hydroxy carboxylic acid or with an aliphatic ester or polyester as described above), may also comprise branching agents. These poly(hydroxy carboxylic acid)s can have a branched, star or three-dimensional network structure. The branching agent is not limited so long as it comprises at least three hydroxyl groups and/or at least three carboxyl groups. The branching agent can be added during polymerisation. Examples include polymers such as polysaccharides, in particular cellulose, starch, amylopectin, dextrin, dextran, glycogen, pectin, chitin, chitosan and derivates thereof. Other examples include aliphatic polyhydric alcohols such as glycerine, pentaerythritol, dipentaerythritol, trimethylolethane, trimethylolpropane, xylitol, inositol and the like. Yet another example of a branching agent is an aliphatic polybasic acid. Such acids include cyclohexanehexacarboxylic acid, butane-1,2,3,4-tetracarboxylic acid, 1,3,5-pentane-tricarboxylic acid, 1,1,2-ethanetricarboxylic acid and the like.

The total molecular weight of the poly(hydroxy carboxylic acid) depends on the desired mechanical and thermal properties and mouldability of the nanoclay composite and of the final resin composition. It is preferably from 5,000 to 1,000,000 g/mol, more preferably from 10,000 to 500,000 g/mol and even more preferably from 35,000 to 200,000 g/mol. Most preferably the total molecular weight of the polymer is from 40,000 to 100,000 g/mol.

The molecular weight distribution is generally monomodal. However, in the case of mixtures of two or more fractions of poly(hydroxy carboxylic acid)s of different weight average molecular weight and/or of different type, the molecular weight distribution can also be multimodal e.g. bi- or trimodal.

From a standpoint of availability and transparency, the poly(hydroxy carboxylic acid) is preferably a polylactic acid (PLA). Preferably the polylactic acid is a homopolymer obtained either directly from lactic acid or from lactide, preferably from lactide.

In the past few years, the general public has become increasingly apprehensive of the impact man-made waste has on the environment. Hence there is a growing interest in developing novel biodegradable (and preferably compostable) plastics from renewable resources.

One particularly interesting candidate for this task are poly(hydroxy carboxylic acid)s, in particular polylactic acid, now commercially available on a relatively large scale. The lactic acid is obtained from plants such as corn and rice or other sugar- or starch-producing plants. Not only is PLA obtainable from renewable materials, it is also easily compostable. For these reasons, there is significant interest in using PLA as a substitute in applications, where petroleum-based thermoplastics have conventionally been used.

Unfortunately, PLA used on its own does not have the same advantageous properties as conventional plastics do. In particular PLA has performance problems related to heat resistance, brittleness and limited flexibility, resulting in poor mechanical strength. On the other hand, polyolefins, in particular polypropylene, have much better mechanical properties. It has been attempted to combine these properties by blending PLA with polyolefins to obtain a resin that is at least partially biodegradable, but still has acceptable mechanical properties. However, up until now it was assumed that it would be difficult, even impossible, to obtain homogeneous PLA and polyolefin blends, due to the differences in polarity and molecular weight distribution. In the past, compatibilising agents were used. However, this requires an additional industrial step, as well as specific conditions during extrusion. Furthermore, undesirable by-products are created when adding compatibilising agents. Thus both the compatibilising agent and the by-products change the properties of the desired end product, be it a film, fibre or moulded object.

Using biodegradable poly(hydroxy carboxylic acid)s to disperse nanoclays into polyolefins thus has the added benefit of providing a resin that is at least partially biodegradable and/or partially obtainable from renewable resources.

Thus, preferably the poly(hydroxy carboxylic acid) that is selected is biodegradable, for example polylactic acid. Biodegradability is herein defined as provided by the standard EN 13432:2000. In order for packaging material to be biodegradable it must have a lifecycle, which can be described as follows:
• a period of storage and/or use starting from time to, which is the moment the material comes off the production line;
• a period of disintegration starting at time t₁, during which the polymer begins to significantly chemically disintegrate e.g. via the hydrolysis of ester bonds;
• a period of biodegradation, during which the partly hydrolysed polymer biologically degrades as a result of the action of bacteria and micro organisms.

It is important to make the distinction between degradable, biodegradable and compostable as often these terms are used interchangeably. In addition to the above, a *compostable* plastic is "capable of undergoing biological decomposition in a compost site as part of an available program, such that the plastic is not visually distinguishable and breaks down to carbon dioxide, water, inorganic compounds, and biomass, *at* a *rate consistent with known compostable materials (e.g. cellulose) and leaves no toxic residue"* (ASTM). On the other hand a *degradable* plastic is one which is merely chemically changed i.e. there is no requirement for the plastic to be biologically degraded by microorganisms. Therefore, a degradable plastic is not necessarily biodegradable and a biodegradable plastic is not necessarily compostable (that is, it breaks down too slowly and/or leaves toxic residue).

In particular, the EN 13432:2000 standard for compostability has the following main features:
• Disintegration is measured by sieving the material to determine the biodegraded size. To be considered compostable, less than 10% of the material should be larger than 2mm in size.
• Biodegradability is determined by measuring the amount of carbon dioxide produced over a certain time period by the biodegrading plastic. To be considered compostable, it must be 90% biodegraded within 90 days.
• Eco-toxicity is measured by determining whether the concentration of heavy metals is below the limits set by the standard and by testing plant growth by mixing the compost with soil in different concentrations and comparing it with controlled compost.

### Composite processing of poly(hydroxy carboxylic acid) and nanoclays

The poly(hydroxy carboxylic acid) and the nanoclays are blended together to form a nanoclay-polymer composite. This composite can then be used as a masterbatch to be added to a polyolefin and to introduce nanoclays into the polyolefin composition more homogeneously than direct addition of the nanoclay to the polyolefin.

In particular, the Applicant has observed that blends of nanoclays and poly(hydroxy carboxylic acid)s are surprisingly homogeneous. It appears that the polarity of the nanoclays is more similar to poly(hydroxy carboxylic acid)s than to polyolefins. Therefore, the nanoclay - poly(hydroxy carboxylic acid) composites are more homogeneous than if the nanoclay were blended directly into the polyolefin.

The method of composite processing i.e. blending is not particularly limited and can be carried out according to any known method in the art. One example of composite processing is solution processing whereby the nanoclays and the poly(hydroxy carboxylic acid) are mixed in a suitable solvent before evaporating said solvent to obtain the composite. Mixing can occur for example by magnetic stirring, shear mixing, refluxing, or ultrasonication. Another method that can be used to blend the nanoclays into the polymer is in situ polymerisation. In this case hydroxycarboxylic acids (or cyclic dimers and trimers thereof) are polymerised in the presence of either nanoclays and catalyst, or nanoclays acting as a catalytic support for the polymerisation catalyst. It is also possible to dry blend the nanoclays and the polymer. Dry blending can also be carried out prior to the melt processing stage.

However the preferred method for composite processing is melt processing. This technique takes advantage of the fact that thermoplastics soften when heated above their glass transition temperature (for polymers that are amorphous at room temperature) or above their melt temperature (for polymers that are semi-crystalline at room temperature). Melt processing is fast and simple and makes use of standard equipment of the thermoplastics industry. The components can be melt blended by shear mixing in a batch process such as in a Banbury or Brabender Mixer or in a continuous process, such as in an extruder e.g. a twin screw extruder. During melt blending, the temperature in the blender will generally be in the range between the highest melting point of poly(hydroxy carboxylic acid) employed and up to about 150°C above such melting point, preferably between such melting point and up to 100° C above such melting point.

The time required for the blending can vary broadly and depends on the method of blending employed. The time required is the time sufficient to thoroughly mix the components. Generally, the individual polymers are blended for a time of about 10 seconds to about 60 minutes, preferably to about 45 minutes, more preferably to about 30 minutes.

The proportion of nanoclay added to a given quantity of poly(hydroxy carboxylic acid) is not particularly limited. The nanoclay is present at up to 99 wt % of the composites, preferably up to 75 wt %, more preferably up to 50 wt %, even more preferably up to 25 wt %, more preferably than that up to 20 wt %. It is most preferred that at most 5 wt % of nanoclay is present. A very small quantity of nanoclay is capable of beneficially affecting the properties of a polymer, such that very small quantities can be used, depending on the intended use of the polymer. However, for most applications it is preferred that 0.1 wt % of nanoclay or greater is added.

The proportion of poly(hydroxy carboxylic acid) is not particularly limited. It can range from 1 to 99 wt % of the total composite. Preferably, the composite comprises at least 25 wt % of the poly(hydroxy carboxylic acid), more preferably at least 50 wt %, even more preferably at least 75 wt % and more preferably than that at least 80 wt % of the poly(hydroxy carboxylic acid). Most preferably, the composite comprises at least 95 wt % of the poly(hydroxy carboxylic acid).

Any other additive can be included in the composite masterbatch. Thus additives such as pigments, carbon black, anti-oxidants, UV-protectors, lubricants, anti-acid compounds, peroxides, grafting agents and nucleating agents can be included. However, they may alternatively be added whilst blending the nanoclay composite masterbatch with the polyolefin or they be added to the polyolefin prior to its blending with the nanoclay composite.

### The polyolefin

Once the nanoclay composite masterbatch has been prepared, it can be blended into a resin comprising one or more polyolefins without the need of any compatibilisers.

The polyolefin can be any polymer of α-olefins. The term "polyolefin" herein includes homo- and copolymers of α-olefins. The α-olefin is any 1-alkylene comprising from 2 to 12 carbon atoms, for example, ethylene, propylene, 1-butene, 1-pentene and 1-hexene. When the polyolefin is a polymer of an olefin having 3 or more carbon atoms, such as polypropylene, the polyolefin may be atactic, isotactic or syndiotactic.

If the polyolefin is a copolymer, the comonomer can be any α-olefin i.e. any 1-alkylene comprising from 2 to 12 carbon atoms, but different from the main monomer. In certain cases, the comonomer can also be any functionalised compound that comprises a vinyl group. These kind of vinyl-containing comonomers comprise from 2 to 12 carbon atoms and include, for example, vinyl acetate, acrylic acids and acrylates. The copolymer can be an alternating, periodic, random, statistical or block copolymer.

The term polyolefin herein also includes blends of two or more polyolefins as defined above.

Preferably, the polyolefin used in the resin composition of the invention is a homo- or copolymer of ethylene or propylene.

The α-olefins can be polymerised either at high pressure or at low pressure. When polymerising at high pressure, in particular ethylene, no catalyst is required as the polymerisation occurs via a radical mechanism. The polymerisation of ethylene at high pressure can be initiated using an initiator, for example, a peroxide. Ethylene polymerised at high pressure is known as low density polyethylene (LDPE). It has a density of between 0.910 and 0.940 g/cm³ due to the presence of a high degree of long and short chain branching. It has unique flow properties, allowing it to be easily processed. However, the crystal structure of LDPE is not packed very tightly and the inter- and intramolecular forces are weak. Therefore, mechanical properties such as tensile strength, environmental stress crack resistance (ESCR) and tear resistance are particularly low in LDPE. However by blending LDPE with nanoclay-containing poly(hydroxy carboxylic acid)s, the mechanical properties of LDPE are greatly improved, without losing any of its processing advantages.

Preferably the ethylene is polymerised at high pressure with a comonomer, wherein the comonomer is one of the vinyl-containing compounds described above, for example, vinyl acetate, acrylic acids and acrylates. These comonomers impart on the LDPE polar properties. Thus the LDPE copolymer is more compatible with the poly(hydroxy carboxylic acid)-nanoclay composite and the two components can be easily mixed to form a homogeneous blend. No compatibiliser is required for this purpose. Most preferably, the copolymer is a ethylene-vinyl acetate polymer, the comonomer being vinyl acetate.

The relative amount of comonomer in the high pressure ethylene copolymer is not particularly limited. Preferably, the comonomer content of high pressure ethylene copolymers does not exceed 30 wt% of the ethylene copolymer. More preferably it does exceed 20 wt % and most preferably it is at most 10 wt %.

Alternatively, any type of low-pressure polymerised polyolefin, catalysed by any known appropriate means in the art, can be used in the resin composition according to the invention. Examples of suitable catalysts include single site catalysts (in particular metallocene catalysts), Ziegler-Natta catalysts, and chromium catalysts. If required, more than one catalyst of the same or different type can be used, either simultaneously in one reactor, in two parallel reactors or in two reactors connected to each other in series, to obtain multimodal or broader molecular weight distributions.

Examples of suitable catalysts for polymerising ethylene, in particular, include single site catalysts (in particular metallocene catalysts), Ziegler-Natta catalysts, and chromium catalysts. However any other catalyst known in the art can be used too. Low-pressure polymerised ethylene is more linear than LDPE, having low concentrations of long chain branching, giving it stronger intermolecular forces and higher tensile strength than LDPE. Low-pressure polymerised ethylene can be broadly categorised as linear low density (LLDPE), medium density (MDPE) and high density (HDPE) polyethylene, the density being mainly regulated by the relative amount of comonomer added; the more comonomer added, the higher the degree of short chain branching and the lower the density. Preferably, the comonomer is polypropylene, 1-butene, 1-pentene or 1-hexene.

Examples of suitable catalysts for polymerising propylene include Ziegler-Natta and single site catalysts (in particular metallocene catalysts). However any other catalyst known in the art can be used too. The polypropylene can be syndiotactic, isotactic or atactic. Isotactic polypropylenes can be obtained using Ziegler-Natta catalysts or appropriate single-site catalysts (in particular metallocene catalysts). Syndiotactic and atactic polypropylenes are obtainable using appropriate single-site catalysts (in particular metallocene catalysts). Isotactic polypropylene is generally selected.

The overall properties of the polyolefin are dependent on the method and type of catalyst used. Single-site catalysed polyolefins, in particular metallocene-catalysed polyolefins, are the preferred polyolefins for the purposes of this invention. It has been found that poly(hydroxy carboxylic acid)s are more miscible with single-site catalysed polyolefins, in particular metallocene-catalysed polyolefins, than those blended with Ziegler-Natta or chromium catalysed polyolefins. Blends of single-site catalysed polyolefins, in particular metallocene-catalysed polyolefins, with poly(hydroxy carboxylic acid)s are homogeneous and do not require any compatibilisation.

Compared to non-metallocene catalysed polyolefins, single-site catalysed polyolefins, in particular metallocene-catalysed polyolefins, have a much narrower molecular weight distribution. Preferably, the molecular weight distribution is of from 1 to 10, preferably from 1 to 7, more preferably from 1 to 5, most preferably from 1 to 4. The narrow molecular weight distribution is compatible with the similarly narrow molecular weight distribution of poly(hydroxy carboxylic acid)s.

Without wishing to be bound by theory, it is thought that the molecular structure of single-site catalysed polyolefins, in particular metallocene-catalysed polyolefins, induces a better compatibility with poly(hydroxy carboxylic acid)s as well. The polyolefins show no or very little long chain branching. The incorporation of comonomers occurs very regularly along the polyolefin backbone resulting in a highly uniform distribution of comonomers i.e. regular short chain branching. This effect (known as very narrow short chain branching distributions (SCBD)) in polyolefins is specific to single-site catalysed polyolefins, in particular metallocene-catalysed polyolefins. As a result, during the crystallization from the melt, very small crystallites are formed throughout the material, thus providing excellent optical clarity. Ziegler-Natta and chromium-catalysed polyolefins on the other hand, have a poor and very random comonomer incorporation, therefore during crystallisation a broad distribution of different sizes of crystallites occurs, resulting in high haze values.

The Applicant believes, without wishing to be bound by theory, that since the molecular architecture of poly(hydroxy carboxylic acid)s is similar to that of single site catalysts (in particular metallocene catalysts), i.e. narrow molecular weight distribution, no long chain branching and narrow short chain branching distributions (if short chains are present at all), poly(hydroxy carboxylic acid)s are therefore more compatible with single-site catalysed polyolefins, in particular metallocene-catalysed polyolefins, than with other polyolefins.

The polyolefin resin may also contain additives such as pigments, carbon black, anti-oxidants, UV-protectors, lubricants, anti-acid compounds, peroxides, grafting agents and nucleating agents can already be included. However, they may alternatively be added to the nanoclay composite masterbatch prior to blending with the polyolefin. They may also be added during blending of the two components of the resin composition according to the invention.

### Blending of the nanoclay-polymer composite masterbatch with the polyolefin

The blending of the nanoclay-poly(hydroxy carboxylic acid) composite with the polyolefin can be carried out according to any physical blending method known in the art. This can be, for instance, wet blending or melt blending. The blending conditions depend upon the blending technique and polyolefin involved. Depending on the method, the polyolefin and the nanoclay composite can be in any appropriate form, for example, fluff, powder, granulate, pellet, solution, slurry, and/or emulsion.

If dry blending of the polymer is employed, the dry blending conditions may include temperatures from room temperature up to just under the melting temperature of the polymer, and blending times in the range of a few seconds to hours. The components are dry blended prior to melt blending.

Melt processing is fast and simple and makes use of standard equipment of the thermoplastics industry. The components can be melt blended in a batch process such as with a Banbury or Brabender Mixer or in a continuous process, such as with a typical extruder e.g. a twin screw extruder. During melt blending, the temperature at which the polymers are combined in the blender will generally be in the range between the highest melting point of the polymers employed and up to about 150°C above such melting point, preferably between such melting point and up to 100° C above such melting point. The time required for the melt blending can vary broadly and depends on the method of blending employed. The time required is the time sufficient to thoroughly mix the components. Generally, the individual polymers are blended for a time of about 10 seconds to about 60 minutes, preferably to about 45 minutes, more preferably to about 30 minutes.

The components can also be wet blended whereby at least one of the components is in solution or slurry form. If solution blending methods are employed, the blending temperature will generally be 25° C to 50°C above the cloud point of the solution involved. The solvent or diluent is then removed by evaporation to leave behind a homogeneous blend of poly(hydroxy carboxylic acid) and polyolefin with nanoclays dispersed throughout the mixture.

The resin composition comprises from 1 to 50 wt % of the nanoclay - poly(hydroxy carboxylic acid) composite, preferably from 1 to 40 wt %, more preferably from 1 to 30 wt % and most preferably from 1 to 20 wt %. The resin composition comprises from 1 to 99 wt % of the polyolefin, preferably from 25 to 99 wt %, more preferably from 50 to 99 wt %, even more preferably from 75 to 99 wt % and most preferably from 80 to 99 wt %.

Preferably, nanoclays make up at least 0.05 wt % of the total resin composition. Preferably, the nanoclay content of the total resin composition does not exceed 10 wt %, more preferably it does exceed 5 wt % and most preferably it does exceed 3 wt %.

Preferably, the resin composition essentially consists of a polyolefin, a nanoclay and poly(hydroxy carboxylic acid).

Due to the improved mechanical properties, flame retardant and barrier properties of the resin composition when compared to the polyolefin alone, and due to the partial biodegradability of the resin composition, it is suitable for a wide variety of applications.

The improved mechanical properties make the resin composition suitable for fibre applications. The fibres of the invention have higher stiffness, increased tensile strength, higher tenacity, better energy absorption capabilities and very good strain at break. Hydrophilicity of the polyolefin-containing fibre is also increased due to the presence of the polar poly(hydroxy carboxylic acid) component. The fibres can be produced on an industrial scale as multi-filament yarns, but still having the advantageous properties of the monofilament. Examples of articles made from the fibre comprising the resin composition of the invention are ropes, nets and cables. The light fibres having improved mechanical strength can also be used in anti-ballistic composites to make light protective clothing. In addition the fibres have increased flame retardant properties.

The resin composition can also be transformed into a film with improved printability, better surface tension, increased thermal and high frequency sealability, improved stiffness and enhanced breathability. The film also has good barrier properties against atmospheric gases, in particular oxygen and nitrogen. The resin composition can also be used to manufacture pouches, for example, for medical applications.

The composition is also suitable for typical injection, extrusion and stretch blow moulding applications, but also thermoforming, foaming and rotomoulding. The articles made according to these processes can be mono- or multilayer, at least one of the layers comprising the resin composition of the invention.

The resins also exhibit a flame retardant effect as measured by thermogravimetric analysis (TGA) and cone calorimetry tests. This effect is more pronounced when nanoclays are used in combination with classical flame retardants, such as ATH (aluminium trihydrate) and magnesium hydroxide, due to the presence of synergistic effects between both compounds.

### EXAMPLES

### Example A

Metallocene-catalysed polypropylene (MR2001 from Total Petrochemicals^{®}) having MFR of 25 dg/min is extruded in a Brabender ® Plasticorder twin-screw extruder. Temperature is set at 200°C and screw speed at 60 rpm. The extruded resin is granulated online, then the obtained pellets are processed into disks using a Nissei ® injection press and into films using a Brabender ® blown film line. Fibres are also obtained using a Labline ® equipment. Mechanical tests are carried out on the material. Flame retardant properties are assessed by TGA and cone calorimetry, and the barrier properties are also measured.

### Examples B1 and B2

Metallocene-catalysed polypropylene (MR2001 from Total Petrochemicals®) having MFR of 25 dg/min is mixed with a non-modified nanoclay (Cloisite Na+ from Southern Clay Products ®) *(Example B1)* and an organically modified nanoclay (Cloisite 20A from Southern Clay Products ®) *(Example B2)* in a Brabender ® Plasticorder twin-screw extruder. Temperature is set at 200°C and screw speed at 60 rpm. Each resin is granulated online, then the obtained pellets are processed into disks using a Nissei® injection press and into films using a Brabender ® blown film line. Fibres are also obtained using a Labline ® equipment. Mechanical properties are slightly improved as compared to Example A, while flame retardancy behaviour is improved, mostly with Example B2.

### Examples C1 and C2 (according to the invention)

PLA from Unitika is mixed with a non-modified nanoclay (Cloisite Na+ from Southern Clay Products ®) *(Example C1)* and an organically modified nanoclay (Cloisite 20A from Southern Clay Products ®) *(Example* C2) in a Brabender ® Plasticorder twin-screw extruder to provide two different nanoclay composites. The mixing temperature is set at 200°C and the screw speed at 60 rpm. Each extrudate is then blended with metallocene-catalysed polypropylene (MR2001 from Total Petrochemicals^{®}) using the same equipment and at a temperature of 200°C. Both materials are granulated online, and the obtained pellets are then processed into disks using a Nissei ® injection press and into films using a Brabender ® blown film line. Fibres are also obtained using a Labline ® equipment. Mechanical, flame retardant and barrier properties of both nanocomposites are further improved as compared to Examples B1 and B2.

## Claims

1. A process for preparing a nanoclay-containing masterbatch by melt blending a poly(hydroxy carboxylic acid) with a nanoclay to form a composite.

2. The process according to claim 1 wherein the poly(hydroxy carboxylic acid) is polylactic acid.

3. A process for preparing a resin composition comprising a polyolefin, a nanoclay and poly(hydroxy carboxylic acid) by
i. blending a poly(hydroxy carboxylic acid) with a nanoclay to form a composite
ii. blending the composite with a polyolefin.

4. The process according to claim 3 wherein the polyolefin was prepared with a single-site catalyst, preferably with a metallocene catalyst.

5. The process according to claim 3 or claim 4 wherein the poly(hydroxy carboxylic acid) is polylactic acid.

6. The process according to any one of claims 3 to 5 wherein the poly(hydroxy carboxylic acid) is melt blended with a nanoclay.

7. A resin composition comprising a polyolefin, a nanoclay and poly(hydroxy carboxylic acid).

8. The resin composition according to claim 6 wherein the polyolefin was prepared with a single-site catalyst, preferably with a metallocene catalyst.

9. The resin composition according to claim 6 or claim 7 wherein the poly(hydroxy carboxylic acid) is polylactic acid.

10. The resin composition according to any one claims 6 to 8 wherein the composition comprises at most 10% by weight of a nanoclay.

11. The resin composition according to any one claims 6 to 9 wherein the polyolefin is selected from polypropylene and polyethylene homo- and copolymers.

12. Use of the resin composition according to any one claims 6 to 10 in injection, extrusion or stretch blow moulded or thermoformed articles, films, foams or fibres.

13. Use of poly(hydroxy carboxylic acid) as a compatibiliser to blend nanoclays into polyolefins.
